# EUROPEAN PATENT APPLICATION

(11) **EP 4 628 747 A1**
(43) Date of publication of application: **08.10.2025**
(21) Application number: 24221108.4
(22) Date of filing: 18.12.2024
(51) Int. Cl.: F16F 7/116, H02B 1/54

(54) **VIBRATION REDUCTION DEVICE AND NUCLEAR POWER PLANT CABINET USING SAME**

(30) Priority: 05.04.2024 KR 20240046395
(71) Applicant: Doosan Enerbility Co., Ltd., Seongsan-gu Changwon-si, Gyeongsangnam-do 51711 (KR)
(72) Inventor: Kim, Jong In, Changwon-si, Gyeongsangnam-do (KR); Lim, Jae Young, Changwon-si, Gyeongsangnam-do (KR); Son, Jung Dae, Gimhae-si, Gyeongsangnam-do (KR)
(74) Representative: BCKIP Part mbB

(57) **Abstract**

Proposed is a vibration reduction device, installed in a nuclear power plant cabinet where electronic devices are provided and configured to reduce vibrations of the nuclear power plant cabinet, wherein the vibration reduction device includes a casing body provided on one side of the nuclear power plant cabinet and having an accommodation space provided therein, a plurality of springs, which is housed within the casing body and one end of each of which is coupled to the casing body, and a mass body fastened to an opposite end of each of the springs.

## Description

The present application claims priority to Korean Patent Application No. 10-2024-0046395, filed on April 05, 2024.

### BACKGROUND

### Technical Field

The present embodiment relates to a vibration reduction device and a nuclear power plant cabinet using the same. More specifically, the present disclosure relates to a vibration reduction device and a nuclear power plant cabinet using the same, the vibration reduction device being installed in a structure such as a general building, a power plant, or a plant and reducing vibrations due to an earthquake from transmitting to a building or the structure.

### Description of the Related Art

When an earthquake occurs, vibrations are transmitted in a longitudinal direction or a transverse direction to structures such as buildings or facilities, and the transverse vibrations cause the structures to shake and twist severely. When the magnitude of the transmitted vibrations is large, it may partially damage the structure, reducing its stability and, in severe cases, even causing it to collapse.

In particular, damage from earthquakes is more severe in large structures such as power plants and industrial plants, and for this reason, various measures have been proposed to reduce vibrations generated in the large structures.

Conventional methods for reducing vibration include improving the dynamic characteristics of structures, vibration isolation, installing vibration reduction devices on structures, and the like. In particular, installing vibration reduction devices on structures is the most widely used method in terms of its durability and cost-effectiveness.

A friction damper is a vibration reduction device of this type, and conventional friction dampers reduce vibration caused by friction by inserting friction pads into the contact surfaces of a plurality of vertical members. However, these friction dampers rely solely on the frictional force between the surfaces of the vertical members, which results in a problem of limited vibration reduction efficiency.

The foregoing is intended merely to aid in the understanding of the background of the present disclosure, and is not intended to mean that the present disclosure falls within the purview of the related art that is already known to those skilled in the art.

### SUMMARY

Accordingly, the present disclosure has been made keeping in mind the above problems occurring in the related art. An objective of the present embodiment is to provide a vibration reduction device and a nuclear power plant cabinet using the same that may reduce vibrations caused by earthquakes and the like from being transmitted to the nuclear power plant cabinet and vary the weight of a mass body in response to frequency changes of electronic devices housed in the nuclear power plant cabinet by using the mass body fastened to a plurality of springs provided in an accommodation space of the casing body provided on one side of a structure, the nuclear power plant cabinet.

In order to achieve the objectives as described above, the present disclosure may provide a vibration reduction device, installed in a nuclear power plant cabinet where electronic devices are provided and configured to reduce vibrations of the nuclear power plant cabinet, the vibration reduction device including: a casing body provided on one side of the nuclear power plant cabinet and having an accommodation space provided therein; a plurality of springs, which is housed within the casing body and one end of each of which is coupled to the casing body; and a mass body fastened to an opposite end of each of the springs.

The vibration reduction device according to the present disclosure may further include an interface plate disposed between the casing body and the nuclear power plant cabinet; a first connecting means configured to fasten the interface plate to the nuclear power plant cabinet; and a second connecting means configured to fasten the interface plate to the casing body.

In the vibration reduction device according to the present disclosure, the casing body may be fastened to a central portion of the interface plate; and a pair of weight reduction holes may be provided in corresponding portions of the interface plate adj acent to the central portion, having the central portion in a middle of the pair of weight reduction holes.

One end of each of the springs may be mounted with a nut member that is configured to fasten to the casing body by a bolt fastening means; and an opposite end of each of the springs may be mounted with a bolt member that is configured to fasten to the mass body.

The nut member may include: a nut body; and a protrusion rod protruding from one side surface of the nut body and configured to be inserted into an inner side of one end of each of the springs, wherein, in the nut body, a fastening groove to which the bolt fastening means is fastened, is provided.

In addition, the protrusion rod may be provided with a nut detachment prevention protrusion protruding radially outward from a point of a circumferential surface of the protrusion rod, the nut detachment prevention protrusion configured to prevent the protrusion rod from detaching from one end of each of the springs.

The nut member may be inserted into an associated one of the springs by rotating the nut member while the nut detachment preventions protrusion passes between longitudinally adjacent portions of the associated one of the springs during rotation.

The bolt member may include: a bolt body; an insertion rod protruding from one side surface of the bolt body and configured to be inserted into an inner side of an opposite end of an associated one of the springs; and a mounting rod protruding from an opposite side surface of the bolt body and configured to be mounted on an associated one of the plurality of second elementary mass bodies.

The insertion rod may be provided with a detachment prevention protrusion protruding radially outward from a point of a circumferential surface of the insertion rod, the bolt detachment prevention protrusion configured to prevent the insertion rod from detaching from the opposite end of the associated one of the springs. On a circumferential surface of the mounting rod, screw threads are provided.

The mass body may include: a first mass body including a plurality of first elementary mass bodies, in each of which is provided with a through hole through which the opposite end of an associated one of the springs penetrates; and a second mass body including a plurality of second elementary mass bodies, wherein each of the plurality of second elementary mass bodies is configured to be coupled to the opposite end of one of the springs that has penetrated an associated one of the plurality of first elementary mass bodies.

The first mass body and the second mass body may have different lengths.

In addition, a first fastening end may be provided on one surface of one of the plurality of first elementary mass bodies of the first mass body and configured to be brought into close contact with an associated one of the plurality of second elementary mass bodies of the second mass body; and a second fastening end may be provided on one surface of one of the plurality of second elementary mass bodies of the second mass body and configured to be brought into close contact with one of the plurality of the first elementary mass bodies of the first mass body.

In addition, the present disclosure may provide a nuclear power plant cabinet, the nuclear power plant cabinet including: a cabinet body having electronic devices provided therein; and a vibration reduction device mounted on one side of the cabinet body and configured to reduce vibrations transmitted to the cabinet body.

In the nuclear power plant cabinet according to the present disclosure, the vibration reduction device may include: a casing body having an accommodation space provided therein and mounted on one side of the cabinet body; a plurality of springs, which is housed inside the casing body and each of which has one end coupled to the casing body; and a mass body fastened to an opposite end of each of the springs.

The vibration reduction device may further include: an interface plate disposed between the casing body and the nuclear power plant cabinet; a first connecting means configured to fasten the interface plate to the nuclear power plant cabinet; and a second connecting means configured to fasten the interface plate to the casing body.

The casing body may be fastened to a central portion of the interface plate, and a pair of weight reduction holes may be provided in corresponding portions of the interface plate adjacent to the central portion, having the central portion in a middle of the pair of weight reduction holes.

One end of each of the springs may be mounted with a nut member that is configured to fasten to the casing body by a bolt fastening means; and an opposite end of each of the springs may be mounted with a bolt member that is configured to fasten to the mass body.

The nut member may include: a nut body; and a protrusion rod protruding from one side surface of the nut body and configured to be inserted into an inner side of one end of each of the springs, wherein, in the nut body, a fastening groove, to which the bolt fastening means is fastened, may be provided.

The protrusion rod may be provided with a nut detachment prevention protrusion protruding radially outward from a point of a circumferential surface of the protrusion rod, the nut detachment prevention protrusion configured to prevent the protrusion rod from detaching from one end of each of the springs.

The nut member is configured to be inserted into an associated one of the springs by rotating the nut member while the nut detachment preventions protrusion passes between longitudinally adjacent portions of the associated one of the springs during rotation.

The bolt member may include: a bolt body; an insertion rod protruding from one side surface of the bolt body and configured to be inserted into an inner side of an opposite end of an associated one of each of the springs; and a mounting rod protruding from an opposite side surface of the bolt body and configured to be mounted on an associated one of the plurality of second elementary mass bodies.

The insertion rod may be provided with a bolt detachment prevention protrusion protruding radially outward from a point of a circumferential surface of the insertion rod, the bolt detachment prevention protrusion configured to prevent the insertion rod from detaching from the opposite end of the associated one of the springs . On a circumferential surface of the mounting rod, screw threads may be provided.

The mass body may include: a first mass body including a plurality of first elementary mass bodies, each of which is provided with a through hole through which the opposite end of an associated one of the springs penetrates; and a second mass body including a plurality of second elementary mass bodies, wherein each of the plurality of second elementary mass bodies is configured to be coupled to the opposite end of one of the springs that has penetrated an associated one of the plurality of first elementary mass bodies.

The first mass body and the second mass body may have different lengths.

In addition, a first fastening end may be provided on one surface of one of plurality of first elementary mass bodies of the first mass body and configured to be brought into close contact with an associated one of the plurality of second elementary mass bodies of the second mass body; and a second fastening end may be provided on one surface of one of the plurality of second elementary mass bodies of the second mass body and configured to be brought into close contact with one of the plurality of the first elementary mass bodies of the first mass body.

As described above, according to a vibration reduction device and a nuclear power plant cabinet using the same according to the present disclosure, the vibration reduction device may vary the number of springs, each end of which is mounted to the casing body after being housed within it, and the weight of the mass body mounted on the springs, thereby responding to various displacements. In addition, the vibration reduction device may secure greater displacement by providing the mass body on only one side of each of the springs.

In addition, the vibration reduction device may vary the weight of the mass body, thereby reducing vibrations transmitted to the nuclear power plant cabinet where the vibration reduction device is installed by smoothly responding to the frequency changes in the electronic devices housed within it.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view schematically illustrating a vibration reduction device according to an embodiment of the present disclosure;
FIG. 2 is a perspective view illustrating a state in which the vibration reduction device in FIG. 1 is fastened to an interface plate mounted on a nuclear power plant cabinet;
FIG. 3 is an exploded perspective view illustrating a state in which a plurality of springs to which a mass body is fastened to the casing body illustrated in FIG. 2;
FIG. 4 is a sectional view illustrating an inner side of the vibration reduction device illustrated in FIG. 1;
FIG. 5 is an exploded sectional view illustrating a state where one of a plurality of first elementary mass bodies of the first mass body and associated one of a plurality of second elementary mass bodies of a second mass body both illustrated in FIG. 4 are to be fastened to each other and a state in which one of the springs is to be fastened to the first elementary mass body and the second elementary mass body;
FIG. 6 is a sectional view illustrating another embodiment of the mass body illustrated in FIG. 4.
FIG. 7 is a sectional view illustrating still another embodiment of the mass body illustrated in FIG. 4; and
FIG. 8 is an exploded perspective view illustrating a nuclear power plant cabinet according to still another embodiment of the present disclosure.

### DETAILED DESCRIPTION

Hereinbelow, an exemplary embodiment of the present disclosure will be described in detail with reference to the accompanying drawings. Before this, terms or words used in this specification and the claims should not be interpreted solely by their usual or dictionary meanings. Instead, they should be understood according to the technical ideas of this disclosure, on the basis of the principle that the inventor may define terms in a way that best explains their disclosure.

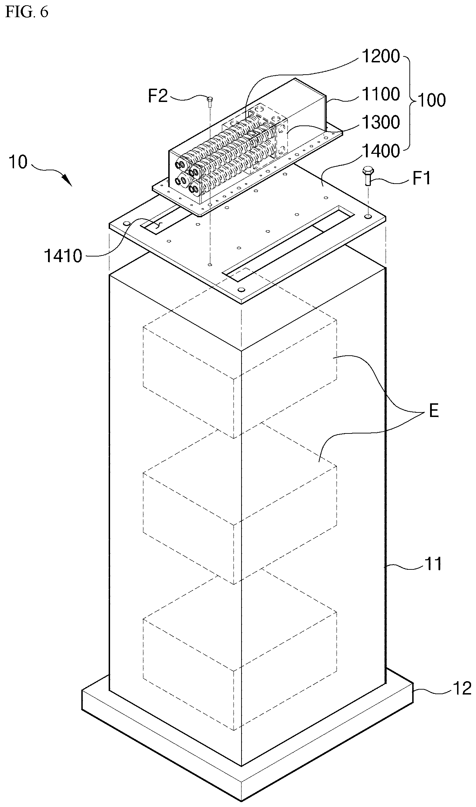

With reference to FIG. 6, inside the nuclear power plant cabinet 10 according to an embodiment of the present disclosure, electronic devices E that are in charge of controlling various facilities in a nuclear power plant are provided. The nuclear power plant cabinet 10 is designed with seismic consideration to reduce vibrations caused by earthquakes and similar events. The nuclear power plant cabinet 10 may include a cabinet body 11 that houses the electronic devices E and a vibration reduction device 100 designed to mitigate vibrations. The vibration reduction device 100 is mounted on one side of the cabinet body 11 and serves to reduce vibration transmitted to the cabinet body 11.

The cabinet body 11 may be generally in the shape of a cuboid having a bottom and a top, but not limited thereto. The direction between the bottom and the top of the cabinet body 11 may be referred to as a vertical direction. The vibration reduction device 100 may be mounted on the top of the cabinet body 11.

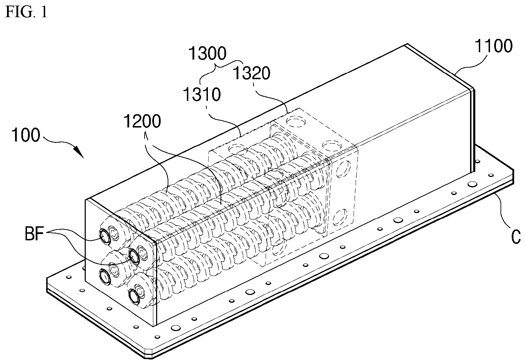

With reference to FIGS. 1 and 6, a friction damper (not shown) may be applied to a lower part (i.e., the bottom) of the cabinet body 11 to reduce vertical vibrations transmitted to the cabinet body 11. A support frame 12 may be provided to support the cabinet body 11 at the bottom.

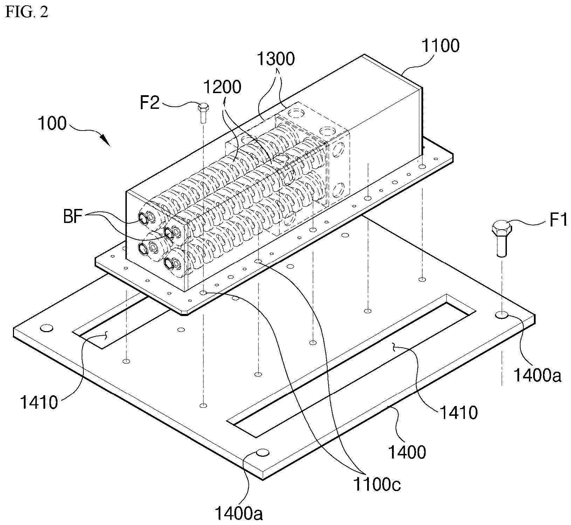

With reference to FIGS. 2 and 6, a vibration reduction device 100 may be installed on one side (e.g., on the top) of the cabinet body 11 which is supported by the support frame 12 at the bottom. The vibration reduction device 100 serves to reduce vibration of the cabinet body 11 in which the electronic devices E are installed inside. The vibration reduction device 100 includes a casing body 1100, a plurality of springs 1200, and a mass body 1300 and may further include an interface plate 1400.

With reference to FIGS. 1 to 3 and FIG. 6, the casing body 1100 is provided on one side (e.g., the top) of the cabinet body 11 of the nuclear power plant cabinet 10. Within the casing body 1100, an accommodation space 1100a is formed, housing a plurality of springs 1200 and the mass body 1300. The accommodation space 1100a is sealed by a cover C, ensuring the components inside are securely enclosed. The casing body 1100 may have a widened surface corresponding to the cover. When the cover C seal the casing body 1100, cover C may be coupled with the widened surface of the casing body 1100. The cover C and the widened surface of the casing body 1100 may be coupled via bolts.

The central axes of the plurality of springs 1200 may be parallel to each other. The direction along a central axis of the plurality of springs 1200 may be referred to as the longitudinal direction.

The plurality of springs 1200, housed inside the casing body 1100, each has one end coupled to the casing body 1100. The number of springs 1200 coupled to the casing body 1100 may be adjusted according to the displacement experienced by the cabinet body 11.

With reference to FIGS. 2 to 5, for each of the springs 1200, one end of each of the springs 1200 is coupled to the casing body 1100, while an opposite end is mounted (i.e. coupled) with the mass body 1300.

A nut member 1210 is mounted on one end of each of the springs 1200 coupled to the casing body 1100, while bolt member 1220 is mounted on the opposite end of an associated one of the springs 1200 to which the mass body 1300 is mounted.

A through hole 1100b, through which a bolt fastening means BF passes, is provided on one surface of the casing body 1100 to which one end of the associated one of the springs 1200 is connected. The number of through holes 1 100b provided on this surface may correspond to the number of springs 1200 housed within the accommodation space 1100a.

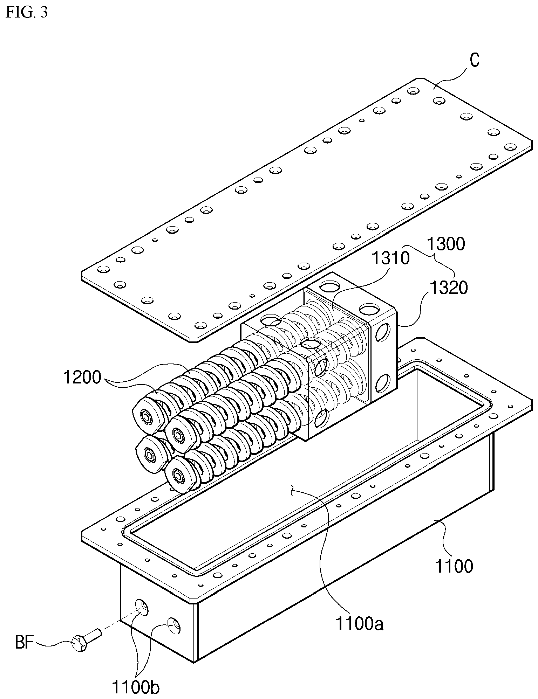

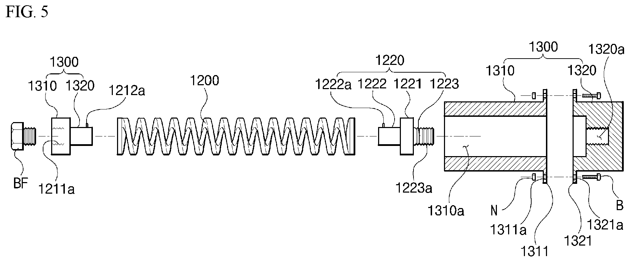

With reference to FIGS. 3 and 5, the nut member 1210 mounted on one end of each of the springs 1200 includes a nut body 1211 and a protrusion rod 1212. The protrusion rod 1212 protrudes from one side surface of the nut body 1211 in the longitudinal direction. The nut body 1211 may have a cylindrical shape but it is not limited thereto, For example, the nut body 1211 may have a quadrangular shape. A fastening groove 1211a may be provided on an opposite side surface of the nut body 1211, to which one end of the bolt fastening means BF having penetrated the through hole 1 100b is fastened. Here, a screw groove (not shown) may be provided on an inner circumferential surface of the fastening groove 1211a.

On one side surface of the nut body 1211, the protrusion rod 1212 is provided to protrude outward in the longitudinal direction toward the spring 1200. The protrusion rod 1212 is inserted into the inside of one end of the spring 1200. Here, the protrusion rod 1212 may have a detachment prevention protrusion 1212a protruding radially outward from a point on its circumference to prevent it from detaching from one end of the spring 1200.

When the protrusion rod 1212, equipped with the detachment prevention protrusion 1212a, is rotated and inserted into an inner side of one end of each of the springs 1200, the protrusion rod 1212 provides support for that end of the spring 1200.

The nut member 1210 is inserted into an associated one of the springs by rotating the nut member 1210 while the detachment prevention protrusion 1212 passes between longitudinally adjacent portions of the associated one of the springs during rotation.

The protrusion rod 1212 remains fastened to the one end of each of the springs 1200 due to the detachment prevention protrusion 1212a unless it is rotated in the opposite direction for removal. As a result, the protrusion rod 1212 effectively supports and secures one end of each of the springs 1200.

The bolt member 1220 mounted on the opposite end of each of the springs 1200 includes a bolt body 1221, an insertion rod 1222 protruding from one side surface of the bolt body 1221 and inserted into the opposite end of each of the springs 1200, and a mounting rod 1223 protruding from an opposite side surface of the bolt body 1221 and mounted on the mass body 1300.

A detachment prevention member 1222a, which is configured to prevent the insertion rod 1222 from detaching from the opposite end of each of the springs 1200, may protrude radially outward from a point on the circumference of the insertion rod 1222.

When the insertion rod 1222, equipped with the detachment prevention protrusion 1222a, is rotated and inserted into an inner side of one end of each of the springs 1200, the insertion rod 1222 provides support for that end of the spring 1200. The bolt member 1220 is inserted into an associated one of the springs by rotating the bolt member 1220 while the detachment prevention protrusion 1222 passes between longitudinally adjacent portions of the associated one of the springs during rotation.

In addition, screw threads 1223a, which are configured to screw-couple with the mass body 1300, may be provided on the mounting rod 1223.

The mass body 1300, fastened to the opposite end of each of the springs 1200 via the bolt member 1220 mounted thereon, may allow its weight to vary in response to frequency changes in the electronic devices E provided in the cabinet body 11. The mass body 1300 includes a first mass body 1310 and a second mass body 1320.

The first mass body 1310 includes a plurality of first elementary mass bodies having different weights. Each of these first elementary mass bodies is provided with a through-hole 1310a allowing the opposite end of an associated one of the springs 1200, mounted with the bolt member 1220 thereto, to pass through. The plurality of first elementary mass bodies included in the first mass body 1310 has different weights, allowing the weight of the first mass body 1310 to vary in response to frequency changes in the electronic devices E provided in the cabinet body 11.

The number of the plurality of first elementary mass bodies of the first mass body 1310 may correspond to the number of springs 1200.

The second mass body 1320 includes a plurality of second elementary mass bodies having different weights. Each of the plurality of second elementary mass bodies is connected to the bolt member 1220 mounted on the opposite end of the associated one of the springs that has penetrated the associated one of the plurality of first elementary mass bodies of the first mass body 1310. The second mass body 1320 may have a weight different from the first mass 1310. A fastening hole 1320a, to which the bolt member 1220 is fastened, is provided in an associated one of the plurality of second elementary mass bodies of the second mass body 1320. A screw groove (not shown) may be provided on an inner circumferential surface of the fastening hole 1320a.

The first mass body 1310 and the second mass body 1320 may have different weights, so they may have different lengths.

With reference to FIGS. 5 and 6, the weight of the mass body 1300 can be adjusted based on the anticipated natural frequency expected to be transmitted to the cabinet body 11 during events such as earthquakes. The first mass body 1310 and the second mass body 1320 are designed to have different weights. By combining these mass bodies 1310 and 1320, the system can effectively respond to a wide range of expected natural frequencies, ensuring improved vibration reduction performance.

When the expected natural frequency transmitted to the cabinet body 11 is low, the weight of the mass body 1300 increases, and as the expected natural frequency increases, the weight of the mass body 1300 decreases.

For example, when the expected natural frequency transmitted to the cabinet body 11 is 11 Hz, the mass body 1300 may have a weight of 23 kg, and when the expected natural frequency is 13 Hz, the mass body 1300 may have a weight of 16.5 kg.

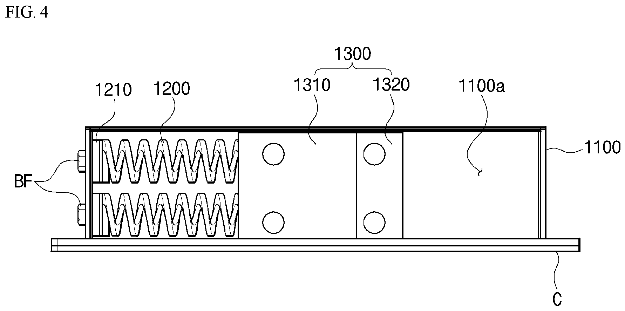

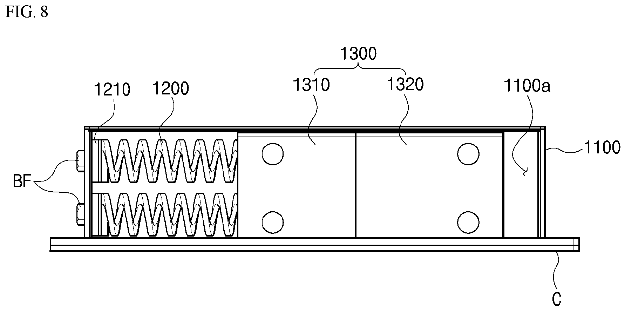

With reference to FIG. 4, the first mass body 1310 of the mass body 1300 housed inside the casing body 1100 and mounted on the opposite end of each of the springs 1200 is illustrated as being longer and heavier than the second mass body 1320 but is not limited thereto. As illustrated in FIG. 8, the length of the second mass body 1320 may be the same or longer than that of the first mass body 1310, and the weight of the second mass body 1320 may be equal to or even be heavier than that of the first mass body 1310.

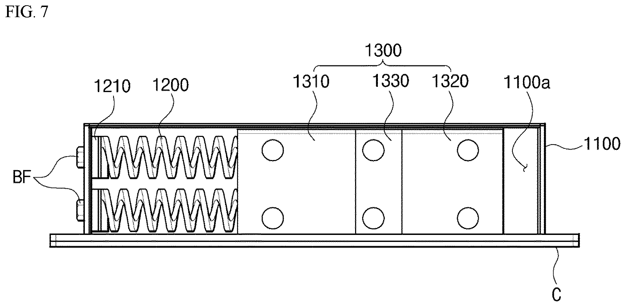

With reference to FIG. 7, the mass body 1300 may not be limited to the first mass body 1310 and the second mass body 1320 and may further include a third mass body 1330. The third mass body 1330 may be disposed between the first mass body 1310 and the second mass body 1320 and have a different weight and length from the first mass body 1310 and the second mass body 1320. Through holes (not shown) may be provided in the third mass body 1330, so that each of the opposite ends of the spring 1200 pass through, respectively. The springs 1200, having passed through the third mass body 1330 via the through holes, may be fastened correspondingly to the second mass body 1320.

With reference to FIG. 5, a first fastening end 1311 is provided on one longitudinal end surface of an associated one of the plurality of first elementary mass bodies of the first mass body 1310. The first fastening end 1311 is configured to be brought into close contact with an associated one of the plurality of second elementary mass bodies of the second mass body 1320. A second fastening end 1321 is provided on one longitudinal end surface of an associated one of the plurality of second elementary mass bodies of the second mass body 1320. The second fastening end 1321 is configured to be brought into close contact with the associated one of the plurality of first elementary mass bodies of the first mass body 1310.

The first fastening end 1311 is extended radially outward at the longitudinal end surface of the associated first elementary mass body, having a larger cross-sectional area than the cross-sectional area of the first elementary mass body. Similarly, the second fastening end 1321 is extended radially outwardly at the longitudinal end surface of the associated second elementary mass body, having a larger cross-sectional area than the cross-sectional area of the second elementary mass body.

In addition, a first fastening hole 1311a and a second fastening hole 1321a, through which a bolt B passes, are provided in the first fastening end 1311 and the second fastening end 1321, respectively. The bolt B passes through the first fastening end 1311 and the second fastening end 1321 along the longitudinal direction. The bolt B is fastened by a nut N.

Since a nut N is fastened to the bolt B that has passed through both the first fastening hole 1311a and the second fastening hole 1321a, the associated one of the plurality of first elementary mass bodies of the first mass body 1310 and the associated one of the plurality of second elementary mass bodies of the second mass body 1320 are coupled and fixed by the bolt B and the nut N.

With reference to FIGS. 2 and 6, an interface plate 1400 is disposed between the casing body 1100 and the cabinet body 11. The interface plate 1400 is combined and fixed to the cabinet body 11 by a first fastening means F 1, and a bolt may be used as the first fastening means F 1.

The casing body 1100 is coupled to the interface plate 1400, which is fastened to the cabinet body 11. The casing body 1100 is combined and fixed to the interface plate 1400 using a second fastening means F2. The first fastening means F1 and the second fastening means F2 may use the same type of bolts.

The second fastening means F2 may fasten the widened surface of the casing body 1100, the cover C and the interface plate 1400 by passing through the widened surface of casing body 110 and the cover C and being coupled with the interface plate 1400.

A plurality of fastening holes 1400a through which the first fastening means F1 passes are provided on an outer peripheral area of the upper surface of the interface plate 1400. A plurality of fastening holes 1 100c through which the second fastening means F2 passes are provided on the casing body 1100, specifically, on the widened surface of the casing body 1100.The plurality of fastening holes 1100c may be provided on a protrusion end that protrudes outward from the casing body 1100 (i..e., the widened surface of the casing body 1100).

The casing body 1100 may be positioned in a central portion of the interface plate 1400 and is fastened to the interface plate 1400 by the second fastening means F2. A pair of weight reduction holes 1410 may be provided in the interface plate 1400 adjacent to the central portion where the casing body 1100 is fastened to reduce the weight of the interface plate 1400. The pair of weight reduction holes 1410 is provided corresponding to one side and an opposite side of the interface plate 1400, respectively, based on the casing body 1100 that is fastened to the central portion. The interface plate 1400 may have an aluminum material that may reduce weight.

The vibration reduction device 100 may vary the number of springs 1200, each end of which is mounted to the casing body 1100, and the weight of the mass body 1300 mounted on the springs 1200 after being housed within it, thereby responding to various displacements. In addition, the vibration reduction device 100 may secure greater displacement by providing the mass body 1300 on only one side of each of the springs 1200.

In addition, by varying the weight of the mass body 1300, the vibration reduction device 100 may reduce vibrations transmitted to the nuclear power plant cabinet 10, where it is installed, by smoothly responding to frequency changes in the electronic devices E housed within the cabinet.

Above, the present disclosure has been described in detail with reference to the embodiments illustrated in the accompanying drawings. However, the above description is merely an example of the technical idea of the present disclosure, and those skilled in the art will appreciate that various modifications and alternative embodiments may be made without departing from the essential characteristics of the present disclosure. Also, it is noted that any one feature of an embodiment of the present disclosure described in the specification may be applied to another embodiment of the present disclosure. Similarly, the present invention encompasses any embodiment that combines features of one embodiment and features of another embodiment. Therefore, the scope of protection of the present disclosure should be interpreted on the basis of the accompanying claims below, and all technical ideas equivalent to those claims should be interpreted as being included in the scope of the rights of the present disclosure.

## Claims

1. A vibration reduction device (100), installed in a nuclear power plant cabinet (10) where electronic devices (E) are provided and configured to reduce vibrations of the nuclear power plant cabinet (10), the vibration reduction device(100) comprising:
a casing body (1100) provided on one side of the nuclear power plant cabinet (10) and having an accommodation space (1100a) provided therein;
a plurality of springs (1200), which is housed within the casing body (1100) and one end of each of which is coupled to the casing body (1100); and
a mass body (1300) fastened to an opposite end of each of the springs (1200).

2. The vibration reduction device (100) of claim 1, further comprising:
an interface plate (1400) disposed between the casing body (1100) and the nuclear power plant cabinet (10);
a first connecting means configured to fasten the interface plate (1400) to the nuclear power plant cabinet (10); and
a second connecting means configured to fasten the interface plate (1400) to the casing body (1100).

3. The vibration reduction device (100) of claim 2, wherein the casing body (1100) is fastened to a central portion of the interface plate (1400); and
a pair of weight reduction holes (1410) is provided in corresponding portions of the interface plate (1400) adjacent to the central portion, having the central portion in a middle of the pair of weight reduction holes (1410).

4. The vibration reduction device (100) of claim 3, wherein one end of each of the springs(1200) is mounted with a nut member(1210) that is configured to fasten to the casing body(1 100) by a bolt fastening means(BF); and
an opposite end of each of the springs (1200) is mounted with a bolt member (1220) that is configured to fasten to the mass body (1300).

5. The vibration reduction device (100) of claim 4, wherein the nut member (1210) comprises:
a nut body (1211); and
a protrusion rod (1212) protruding from one side surface of the nut body (1211) and configured to be inserted into an inner side of one end of each of the springs (1200),
wherein, in the nut body (1211), a fastening groove (121 1a), to which the bolt fastening means (BF) is fastened, is provided.

6. The vibration reduction device (100) of claim 5, wherein the protrusion rod (1212) is provided with a nut detachment prevention protrusion (1212a) protruding radially outward from a point of a circumferential surface of the protrusion rod (1212), the nut detachment prevention protrusion (1212a) configured to prevent the protrusion rod (1212) from detaching from one end of each of the springs (1200),
wherein the nut member (1210) is configured to be inserted into an associated one of the springs (1200) by rotating the nut member (1210) while the nut detachment preventions protrusion passes between longitudinally adjacent portions of the associated one of the springs (1200) during rotation.

7. The vibration reduction device (100) of claim 4, wherein the bolt member (1220) comprises:
a bolt body (1221);
an insertion rod (1222) protruding from one side surface of the bolt body (1221) and configured to be inserted into an inner side of an opposite end of an associated one of the springs (1200); and
a mounting rod (1223) protruding from an opposite side surface of the bolt body (1221) and configured to be mounted on an associated one of the plurality of second elementary mass bodies,
wherein the insertion rod (1222) is provided with a bolt detachment prevention protrusion (1222a) protruding radially outward from a point of a circumferential surface of the insertion rod (1222), the bolt detachment prevention protrusion (1222a) configured to prevent the insertion rod (1222) from detaching from the opposite end of the associated one of the springs (1200), and
on a circumferential surface of the mounting rod (1223), screw threads (1223a) are provided.

8. The vibration reduction device (100) of claim 4, wherein the mass body (1300) comprises:
a first mass body (1310) including a plurality of first elementary mass bodies, each of which is provided with a through hole through which the opposite end of an associated one of the springs (1200) penetrates; and
a second mass body (1320) including a plurality of second elementary mass bodies, wherein each of the plurality of second elementary mass bodies is configured to be coupled to the opposite end of one of the springs (1200) that has penetrated an associated one of the plurality of first elementary mass bodies,
wherein the first mass body (1310) and the second mass body (1320) have different lengths.
wherein a first fastening end (1311) is provided on one surface of one of the plurality of first elementary mass bodies of the first mass body (1310) and configured to be brought into close contact with an associated one of the plurality of second elementary mass bodies of the second mass body (1320); and
a second fastening end (1321) is provided on one surface of one of the plurality of second elementary mass bodies of the second mass body (1320) and configured to be brought into close contact with one of the plurality of the first elementary mass bodies of the first mass body (1310).

9. A nuclear power plant cabinet (10) comprising:
a cabinet body having electronic devices(E) provided therein; and
a vibration reduction device (100) mounted on one side of the cabinet body and configured to reduce vibrations transmitted to the cabinet body.

10. The nuclear power plant cabinet (10) of claim 9, wherein the vibration reduction device (100) comprises:
a casing body (1100) having an accommodation space(1100a) provided therein and mounted on one side of the cabinet body;
a plurality of springs (1200), which is housed inside the casing body (1100) and each of which has one end coupled to the casing body (1100); and
a mass body (1300) fastened to an opposite end of each of the springs (1200).

11. The nuclear power plant cabinet (10) of claim 10, wherein the vibration reduction device (100) further comprises:
an interface plate (1400) disposed between the casing body (1100) and the nuclear power plant cabinet (10);
a first connecting means configured to fasten the interface plate (1400) to the nuclear power plant cabinet (10); and
a second connecting means configured to fasten the interface plate (1400) to the casing body (1100).

12. The nuclear power plant cabinet (10) of claim 11, wherein the casing body (1100) is fastened to a central portion of the interface plate (1400), and
a pair of weight reduction holes (1410) is provided in corresponding portions of the interface plate (1400) adjacent to the central portion, having the central portion in a middle of the pair of weight reduction holes (1410).
wherein one end of each of the springs (1200) is mounted with a nut member (1210) that is configured to fasten to the casing body (1100) by a bolt fastening means (BF); and
an opposite end of each of the springs (1200) is mounted with a bolt member (1220) that is configured to fasten to the mass body (1300).

13. The nuclear power plant cabinet (10) of claim 12, wherein the nut member (1210) comprises:
a nut body (1211); and
a protrusion rod (1212) protruding from one side surface of the nut body (1211) and configured to be inserted into an inner side of one end of each of the springs (1200),
wherein, in the nut body (1211), a fastening groove (121 1a), to which the bolt fastening means (BF) is fastened, is provided, and
the protrusion rod (1212) is provided with a nut detachment prevention protrusion (1212a) protruding radially outward from a point of a circumferential surface of the protrusion rod (1212), the nut detachment prevention protrusion (1212a) configured to prevent the protrusion rod (1212) from detaching from one end of each of the springs (1200).
wherein the nut member (1210) is configured to be inserted into an associated one of the springs (1200) by rotating the nut member (1210) while the nut detachment preventions protrusion passes between longitudinally adjacent portions of the associated one of the springs (1200) during rotation.

14. The nuclear power plant cabinet (10) of claim 12, wherein the bolt member (1220) comprises:
a bolt body (1221);
an insertion rod (1222) protruding from one side surface of the bolt body (1221) and configured to be inserted into an inner side of an opposite end of an associated one of each of the springs (1200); and
a mounting rod (1223) protruding from an opposite side surface of the bolt body (1221) and configured to be mounted on an associated one of the plurality of second elementary mass bodies,
wherein the insertion rod (1222) is provided with a bolt detachment prevention protrusion (1222a) protruding radially outward from a point of a circumferential surface of the insertion rod (1222), the bolt detachment prevention protrusion (1222a) configured to prevent the insertion rod (1222) from detaching from the opposite end of the associated one of the springs (1200), and
on a circumferential surface of the mounting rod (1223), screw threads (1223a) are provided.

15. The nuclear power plant cabinet (10) of claim 12, wherein the mass body (1300) comprises:
a first mass body (1310) including a plurality of first elementary mass bodies, each of which is provided with a through hole through which the opposite end of an associated one of the springs (1200) penetrates; and
a second mass body (1320) including a plurality of second elementary mass bodies, wherein each of the plurality of second elementary mass bodies is configured to be coupled to the opposite end of one of the springs (1200) that has penetrated an associated one of the plurality of first elementary mass bodies,
wherein the first mass body (1310) and the second mass body (1320) have different lengths.
wherein a first fastening end (1311) is provided on one surface of one of plurality of first elementary mass bodies of the first mass body (1310) and configured to be brought into close contact with an associated one of the plurality of second elementary mass bodies of the second mass body (1320); and
a second fastening end (1321) is provided on one surface of one of the plurality of second elementary mass bodies of the second mass body (1320) and configured to be brought into close contact with one of the plurality of the first elementary mass bodies of the first mass body (1310).

## Amended claims

### Amended claims in accordance with Rule 137(2) EPC.

1. A vibration reduction device (100), configured to be installed in a nuclear power plant cabinet (10) where electronic devices (E) are provided and configured to reduce vibrations of the nuclear power plant cabinet (10), the vibration reduction device (100) comprising:
a casing body (1100) configured to be provided on one side of the nuclear power plant cabinet (10) and having an accommodation space (1100a) provided therein;
a plurality of springs (1200), which is housed within the casing body (1100) and one end of each of which is coupled to the casing body (1100);
a mass body (1300) fastened to an opposite end of each of the springs (1200);
an interface plate (1400) configured to be disposed between the casing body (1100) and the nuclear power plant cabinet (10);
a first connecting means configured to fasten the interface plate (1400) to the nuclear power plant cabinet (10); and
a second connecting means configured to fasten the interface plate (1400) to the casing body (1100),
wherein the casing body (1100) is fastened to a central portion of the interface plate (1400); and a pair of weight reduction holes (1410) is provided in corresponding portions of the interface plate (1400) adjacent to the central portion, having the central portion in a middle of the pair of weight reduction holes (1410).

2. The vibration reduction device (100) of claim 1, wherein one end of each of the springs (1200) is mounted with a nut member (1210) that is configured to fasten to the casing body (1100) by a bolt fastening means (BF); and
an opposite end of each of the springs (1200) is mounted with a bolt member (1220) that is configured to fasten to the mass body (1300).

3. The vibration reduction device (100) of claim 2, wherein the nut member (1210) comprises:
a nut body (1211); and
a protrusion rod (1212) protruding from one side surface of the nut body (1211) and configured to be inserted into an inner side of one end of each of the springs (1200),
wherein, in the nut body (1211), a fastening groove (1211a), to which the bolt fastening means (BF) is fastened, is provided.

4. The vibration reduction device (100) of claim 3, wherein the protrusion rod (1212) is provided with a nut detachment prevention protrusion (1212a) protruding radially outward from a point of a circumferential surface of the protrusion rod (1212), the nut detachment prevention protrusion (1212a) configured to prevent the protrusion rod (1212) from detaching from one end of each of the springs (1200),
wherein the nut member (1210) is configured to be inserted into an associated one of the springs (1200) by rotating the nut member (1210) while the nut detachment preventions protrusion passes between longitudinally adjacent portions of the associated one of the springs (1200) during rotation.

5. The vibration reduction device (100) of claim 2, wherein the bolt member (1220) comprises:
a bolt body (1221);
an insertion rod (1222) protruding from one side surface of the bolt body (1221) and configured to be inserted into an inner side of an opposite end of an associated one of the springs (1200); and
a mounting rod (1223) protruding from an opposite side surface of the bolt body (1221) and configured to be mounted on an associated one of the plurality of second elementary mass bodies,
wherein the insertion rod (1222) is provided with a bolt detachment prevention protrusion (1222a) protruding radially outward from a point of a circumferential surface of the insertion rod (1222), the bolt detachment prevention protrusion (1222a) configured to prevent the insertion rod (1222) from detaching from the opposite end of the associated one of the springs (1200), and
on a circumferential surface of the mounting rod (1223), screw threads (1223a) are provided.

6. The vibration reduction device (100) of claim 2, wherein the mass body (1300) comprises:
a first mass body (1310) including a plurality of first elementary mass bodies, each of which is provided with a through hole through which the opposite end of an associated one of the springs (1200) penetrates; and
a second mass body (1320) including a plurality of second elementary mass bodies, wherein each of the plurality of second elementary mass bodies is configured to be coupled to the opposite end of one of the springs (1200) that has penetrated an associated one of the plurality of first elementary mass bodies,
wherein the first mass body (1310) and the second mass body (1320) have different lengths.
wherein a first fastening end (1311) is provided on one surface of one of the plurality of first elementary mass bodies of the first mass body (1310) and configured to be brought into close contact with an associated one of the plurality of second elementary mass bodies of the second mass body (1320); and
a second fastening end (1321) is provided on one surface of one of the plurality of second elementary mass bodies of the second mass body (1320) and configured to be brought into close contact with one of the plurality of the first elementary mass bodies of the first mass body (1310).

7. A nuclear power plant cabinet (10) comprising:
a cabinet body (11) having electronic devices (E) provided therein; and
the vibration reduction device (100) of claim 1 mounted on one side of the cabinet body (11) to reduce vibrations transmitted to the cabinet body (11).

8. The nuclear power plant cabinet (10) of claim 7,
wherein one end of each of the springs (1200) is mounted with a nut member (1210) that is configured to fasten to the casing body (1100) by a bolt fastening means (BF); and
an opposite end of each of the springs (1200) is mounted with a bolt member (1220) that is configured to fasten to the mass body (1300).

9. The nuclear power plant cabinet (10) of claim 8, wherein the nut member (1210) comprises:
a nut body (1211); and
a protrusion rod (1212) protruding from one side surface of the nut body (1211) and configured to be inserted into an inner side of one end of each of the springs (1200),
wherein, in the nut body (1211), a fastening groove (1211a), to which the bolt fastening means (BF) is fastened, is provided, and
the protrusion rod (1212) is provided with a nut detachment prevention protrusion (1212a) protruding radially outward from a point of a circumferential surface of the protrusion rod (1212), the nut detachment prevention protrusion (1212a) configured to prevent the protrusion rod (1212) from detaching from one end of each of the springs (1200).
wherein the nut member (1210) is configured to be inserted into an associated one of the springs (1200) by rotating the nut member (1210) while the nut detachment preventions protrusion passes between longitudinally adjacent portions of the associated one of the springs (1200) during rotation.

10. The nuclear power plant cabinet (10) of claim 8, wherein the bolt member (1220) comprises:
a bolt body (1221);
an insertion rod (1222) protruding from one side surface of the bolt body (1221) and configured to be inserted into an inner side of an opposite end of an associated one of each of the springs (1200); and
a mounting rod (1223) protruding from an opposite side surface of the bolt body (1221) and configured to be mounted on an associated one of the plurality of second elementary mass bodies,
wherein the insertion rod (1222) is provided with a bolt detachment prevention protrusion (1222a) protruding radially outward from a point of a circumferential surface of the insertion rod (1222), the bolt detachment prevention protrusion (1222a) configured to prevent the insertion rod (1222) from detaching from the opposite end of the associated one of the springs (1200), and
on a circumferential surface of the mounting rod (1223), screw threads (1223a) are provided.

11. The nuclear power plant cabinet (10) of claim 8, wherein the mass body (1300) comprises:
a first mass body (1310) including a plurality of first elementary mass bodies, each of which is provided with a through hole through which the opposite end of an associated one of the springs (1200) penetrates; and
a second mass body (1320) including a plurality of second elementary mass bodies, wherein each of the plurality of second elementary mass bodies is configured to be coupled to the opposite end of one of the springs (1200) that has penetrated an associated one of the plurality of first elementary mass bodies,
wherein the first mass body (1310) and the second mass body (1320) have different lengths;
wherein a first fastening end (1311) is provided on one surface of one of plurality of first elementary mass bodies of the first mass body (1310) and configured to be brought into close contact with an associated one of the plurality of second elementary mass bodies of the second mass body (1320); and
a second fastening end (1321) is provided on one surface of one of the plurality of second elementary mass bodies of the second mass body (1320) and configured to be brought into close contact with one of the plurality of the first elementary mass bodies of the first mass body (1310).
